# EUROPÄISCHE PATENTANMELDUNG

(11) **EP 3 431 744 A1**
(43) Veröffentlichungstag der Anmeldung: **23.01.2019**
(21) Anmeldenummer: 18000613.2
(22) Anmeldetag: 19.07.2018
(51) Int. Cl.: F02G 5/04, F01N 5/02, F01K 23/10, F02B 63/06, B08B 3/00

(54) **HOCHDRUCKVORRICHTUNG UND VERFAHREN ZUR STEUERUNG DER ARBEITSFLUIDAUSTRITTSTEMPERATUR UNTER VERWENDUNG DER HOCHDRUCKVORRICHTUNG**

(30) Priorität: 20.07.2017 DE 102017006823
(71) Anmelder: Albrecht, Nico, 76473 Iffezheim (DE)
(72) Erfinder: Albrecht, Nico, 76473 Iffezheim (DE)
(74) Vertreter: Mehl-Mikus, Claudia

(57) **Zusammenfassung**

Die vorliegende Erfindung stellt eine Hochdruckvorrichtung und ein Verfahren zur Steuerung der Arbeitsfluidaustrittstemperatur unter Verwendung dieser Hochdruckvorrichtung bereit. Die erfindungsgemäße Hochdruckvorrichtung (100) hat eine Antriebseinheit (110), die eine Wärmekraftmaschine (111) mit einem Fluidkühler (112) aufweist, und hat eine Pumpeneinheit (120), die in Strömungsrichtung eines Arbeitsfluids einen Arbeitsfluideingang (21, 121), eine Vorrichtung zum Erwärmen des Arbeitsfluids, einen Arbeitsfluidausgang (22, 122), eine Pumpe (124), die von der Wärmekraftmaschine (111) angetrieben wird, und einen Hochdruckausgang (126). Die Vorrichtung zum Erwärmen des Arbeitsfluids weist ein Wärmetauschermodul (20, 20') mit einem Kühlerfluidwärmetauscher (23b) auf, der mit einem Kühlerfluidkreislauf (M_{E}, M_{A}) des Fluidkühlers (112) der Antriebseinheit (110) in thermischer Wirkverbindung steht. Erfindungsgemäß weist die Antriebseinheit (110) einen Ladeluftkühler (112') für die Wärmekraftmaschine (111) auf. Das Wärmetauschermodul (20, 20') hat ferner einen Ladeluftwärmetauscher (23a), der mit einem Ladeluftstrom (L_{E}, L_{A}) des Ladeluftkühlers (112) der Antriebseinheit (110) in thermischer Wirkverbindung steht. Dabei ist der Ladeluftwärmetauscher (23a) über zumindest eine Verbindungsleitung (21') mit dem Arbeitsfluideingang (21) verbunden, und der Kühlerfluidwärmetauscher (23b) ist stromabwärts des Ladeluftwärmetauschers (23a) angeordnet und über zumindest eine Verbindungsleitung (21') mit dem Ladeluftwärmetauscher (23a) verbunden.

## Beschreibung

Die Erfindung betrifft eine Hochdruckvorrichtung, insbesondere eine mobile Hochdruckvorrichtung, mit der ein Arbeitsfluid wie Wasser erwärmt und mit Hochdruck gefördert werden kann. Ferner betrifft die Erfindung ein Verfahren zur Steuerung der Arbeitsfluidaustrittstemperatur unter Verwendung der erfindungsgemäßen Hochdruckvorrichtung.

Aus dem Stand der Technik sind beispielsweise Hochdruckreiniger als derartige Hochdruckvorrichtungen bekannt, die, damit sie energieautark überall eingesetzt werden können, einen Motor aufweisen, um die Hochdruckpumpe zu betreiben. Der Motor ist meist ein Dieselmotor. Zum Erhitzen des Arbeitsfluids bzw. des Brauchwassers wird ein Brenner eingesetzt, der beispielsweise mit Heizöl betrieben wird.

DE 20 2014 100 581 U1 beschreibt einen mobilen Hochdruckreiniger. Er setzt einen Gasmotor zum Antreiben der Pumpe und einen Gasbrenner zum Erwärmen des Wassers ein, sodass für beide Verbraucher Gas als Betriebsstoff eingesetzt werden kann. Der Gasmotor wird mittels einer im Kreislauf geführten Kühlflüssigkeit gekühlt, die wiederum in einem Wärmetauscher zur Vorwärmung des Arbeitsfluids eingesetzt wird.

Aus der DE 198 60 751 A1 ist eine feststehende Hochdruckstrahlanlage zum Behandeln von Oberflächen mit einem Heizmodul bekannt, dessen Energiequelle zumindest teilweise durch Verlustwärme einer Brennkraftmaschine gebildet wird.

In der DE 10 2010 023 174A1 ist ein Verfahren zur Nutzung von Abwärme einer Verbrennungskraftmaschine offenbart, wobei Abgaskühlung und Motorenkühlung als Wärmequellen zur Dampferzeugung auf unterschiedlichen Druckniveaus genutzt werden.

Ausgehend von diesem Stand der Technik ist es Aufgabe der vorliegenden Erfindung, eine hinsichtlich der Energie- und Ökobilanz weiter verbesserte Hochdruckvorrichtung bereitzustellen, die es ermöglicht, das Arbeitsfluid bzw. Brauchwasser energieeffizient und schnell zu erwärmen. Ferner soll die Hochdruckvorrichtung kompakt und platzsparend aufgebaut sein.

Diese Aufgabe wird durch eine Hochdruckvorrichtung mit den Merkmalen des Anspruchs 1 gelöst. Weiterbildungen sind in den Unteransprüchen ausgeführt.

Weitere Aufgabe ist es, ein hinsichtlich der Energie- und Ökobilanz verbessertes Verfahren zur Arbeitsfluid- bzw. Brauchwassererwärmung von Hochdruckvorrichtungen bereitzustellen.

Diese Aufgabe wird durch das Verfahren des Anspruchs 11 gelöst

Eine erste Ausführungsform der erfindungsgemäßen mobilen Hochdruckvorrichtung weist eine Antriebseinheit auf, die eine Wärmekraftmaschine (wie einen Dieselmotor oder einen Gas- oder Benzinmotor) mit einem Fluidkühler umfasst, worunter ein Kühlkreislauf mit einem Kühlfluid zum Kühlen der Wärmekraftmaschine verstanden wird. Weiter weist die Hochdruckvorrichtung eine Pumpeneinheit auf, die in Strömungsrichtung eines Arbeitsfluids, das zumeist Wasser ist, aber auch ein anderes Fluid sein kann, das erwärmt und auf Hochdruck gebracht werden soll, und weiter einen Arbeitsfluideingang, eine Vorrichtung zum Erwärmen des Arbeitsfluids, einen Arbeitsfluidausgang, eine Pumpe, die von der Wärmekraftmaschine angetrieben wird, und einen Hochdruckausgang hat. Dabei weist die Vorrichtung zum Erwärmen des Arbeitsfluids ein Wärmetauschermodul mit einem Kühlerfluidwärmetauscher auf, der mit einem Kühlerfluidkreislauf des Fluidkühlers der Antriebseinheit in thermischer Wirkverbindung steht.

Im Sinne der Erfindung bedeutet "mobil", dass die kompakt aufgebaute und bewegliche Hochdruckvorrichtung mit einem fahrbaren Untersatz/Untergestell versehen werden kann, so dass sie nicht an einen festen Standort gebunden ist. Die Vorrichtung bildet mit dem Untersatz somit einen Anhänger für ein Kfz und kann zu dem jeweiligen Einsatzort gebracht und dort energieautark verwendet werden. Sie ist aufgrund der Anordnung des Kühlerfluidwärmetauschers und des Fluidkühlers der Antriebseinheit kompakt gebaut und damit besonders platzsparend.

Die erfindungsgemäße Hochdruckvorrichtung zeichnet sich dadurch aus, dass die Vorrichtung zum Erwärmen des Arbeitsfluids einen vorhandenen Brenner erheblich weniger nutzen muss und ggfs. sogar auf ihn verzichten kann. Damit wird in entsprechendem Umfang der Brennstoffverbrauch sowie CO₂- und Schadstoffausstoß reduziert, was erfindungsgemäß darauf basiert, dass die Antriebseinheit einen Ladeluftkühler für die Wärmekraftmaschine aufweist und das Wärmetauschermodul einen Ladeluftwärmetauscher aufweist, den ein Ladeluftstrom nach Passage eines Kompressors zur Abkühlung durchströmt. Die Ladeluft (bei Gasmotoren ein fertiges Gas-Luftgemisch) wird direkt in den Wärmetauscher zur Abkühlung eingebracht. Das Kühlmedium ist das Brauchwasser. Dieses kühlt die komprimierte Ladeluft und nimmt die thermische Energie auf. Der Ladeluftwärmetauscher ist dabei über eine oder mehrere Verbindungsleitung(en) mit dem Arbeitsfluideingang verbunden. Stromabwärts ist der Ladeluftwärmetauscher über eine (oder mehrere) Verbindungsleitung(en) mit dem Kühlerfluidwärmetauscher verbunden. Eine Verbindung über mehrere hintereinander in Reihe geschalteter Verbindungsleitungen muss dabei nicht direkt sein, d. h. in einer Verbindung über mehrere Verbindungsleitungen kann auch ein anderer Wärmetauscher zwischengeschaltet und die Verbindung damit indirekt sein.

Thermische Wirkverbindung der Wärmetauscher, die hier alle indirekte Wärmetauscher sind, meint hierbei - und dies gilt für alle hierin beschriebenen Wärmetauscher - dass für beide Stoffströme, zwischen denen der Wärmeaustausch stattfindet, jeweils zumindest ein durch wärmeleitende Wandungen voneinander getrennter Durchtrittsraum vorliegt, der jeweils entsprechende Ein- und Ausgänge für den jeweiligen Stoffstrom aufweist. Die zur Anordnung der Wärmetauscher angegebene Strömungsrichtung bezieht sich immer auf das Arbeitsfluid, das zu erwärmen und auf Hochdruck zu bringen ist. Aus Effizienzgründen kann vorzugsweise jeder Wärmetauscher im Gegenstrom betrieben werden.

Die vorgeschlagene Nutzung der Motorabwärme ermöglicht es, dass weniger Energie zum Erwärmen des Arbeitsfluids auf eine gewünschte Temperatur benötigt wird. Dabei wird gegebenenfalls ein Brenner nur noch unterstützend benötigt oder sogar obsolet. Die erfindungsgemäße Hochdruckvorrichtung ist energieautark und daher mobil einsetzbar und ermöglicht es, ein Arbeitsfluid ohne Einsatz eines Brenners oder eines in der Leistung reduzierteren Brenners, der auch weniger Energie verbraucht, auf ein erforderliches oder gewünschtes Temperaturniveau zu bringen.

Für gewisse Anwendungen kann eine brennerlose Erwärmung des Arbeitsfluids, die nur durch Wärmetausch mittels eines Kühlerfluidwärmetauschers und eines Ladeluftwärmetauschers erreicht wird, bereits ausreichend sein. Je nach beabsichtigter Förderleistung der Pumpe und voraussichtlicher Eintrittstemperatur des Arbeitsmediums kann die Vorrichtung zum Erwärmen des Arbeitsfluids einer erfindungsgemäßen Hochdruckvorrichtung vorzugsweise jedoch ein zweites Wärmetauschermodul mit zumindest einem Abgaswärmetauscher aufweisen, der mit einer Abgasleitung der Wärmekraftmaschine der Antriebseinheit in thermischer Wirkverbindung steht. Dieser Abgaswärmetauscher kann in einer ersten Anordnungskonfiguration des ersten Wärmetauschermoduis stromaufwärts über eine entsprechende Verbindungsleitung mit dem Kühlerfluidwärmetauscher des ersten Wärmetauschermoduls und stromabwärts mit dem Arbeitsfluidausgang verbunden sein. In einer alternativen, zweiten Anordnungskonfiguration des ersten Wärmetauschermoduls kann der Abgaswärmetauscher des zweiten Wärmetauschermoduls stromaufwärts mit dem Ladeluftwärmetauscher des ersten Wärmetauschermoduls und stromabwärts mit dem Kühlerfluidwärmetauscher jeweils über zumindest eine Verbindungsleitung verbunden sein. In dieser zweiten Anordnungskonfiguration des ersten Wärmetauschermoduls ist dann der Kühlerfluidwärmetauscher stromabwärts mit dem Arbeitsfluidausgang verbunden.

In einer Ausführungsform, in der das zweite Wärmetauschermodul nur einen einzigen Abgaswärmetauscher aufweist, ist an diesem selbstverständlich der Abgasausgang angeordnet. In einer anderen Ausführungsform kann das zweite Wärmetauschermodul einen zweiten Abgaswärmetauscher aufweisen, der den Abgasausgang aufweist und in den eine Abgasverbindungsleitung von dem ersten Abgaswärmetauscher mündet. Bezüglich des Arbeitsfluids ist der zweite Abgaswärmetauscher stromaufwärts mit dem Arbeitsfluideingang und stromabwärts mit dem Ladeluftwärmetauscher des ersten Wärmetauschermoduls über zumindest eine Verbindungsleitung verbunden.

In einer weiteren Ausführungsform der erfindungsgemäßen Hochdruckvorrichtung kann vorgesehen sein, dass eine Bypassleitung vorgesehen ist, die zwischen dem ersten und dem zweiten Abgaswärmetauscher verläuft, wobei der erste Abgaswärmetauscher eine regelbare Bypassklappe aufweist, die zwischen dem Abgaseingang und dem Abgasausgang in einer ersten, die Bypassleitung verschließenden Position und in einer zweiten, die Bypassleitung öffnenden Position anordenbar ist. Der Bypass der Abgaswärmetauscher ermöglicht eine Variierung der Austrittstemperatur des Arbeitsfluids.

Ferner kann die Vorrichtung zum Erwärmen des Arbeitsfluids einer erfindungsgemäßen Hochdruckvorrichtung, die einen Gehäusekühler aufweist, ein drittes Wärmetauschermodul mit einem Gehäusekühler-Wärmetauscher aufweisen, der mit dem Gehäusekühler in thermischer Wirkverbindung steht. Der Gehäusekühler-Wärmetauscher kann stromaufwärts über zumindest eine Verbindungsleitung direkt oder indirekt mit dem zweiten Abgaswärmetauscher des zweiten Wärmetauschermoduls oder mit dem Arbeitsfluideingang verbunden sein. Stromabwärts kann der Gehäusekühler-Wärmetauscher direkt oder indirekt über zumindest eine Verbindungsleitung mit dem Ladeluftwärmetauscher verbunden sein.

Die indirekten Verbindungen des Gehäusekühler-Wärmetauschers beziehen sich auf eine Ausführungsform, in der die Vorrichtung zum Erwärmen des Arbeitsfluids ein viertes Wärmetauschermodul aufweist, das zumindest einen Nebenaggregat-Wärmetauscher für ein im Kühlkreislauf geführtes Kühlungsfluid eines Nebenaggregats der Hochdruckvorrichtung aufweist. Dieser Nebenaggregat-Wärmetauscher kann über jeweils zumindest eine Verbindungsleitung entweder stromaufwärts mit dem zweiten Abgaswärmetauscher des zweiten Wärmetauschermoduls und stromabwärts mit dem Gehäusekühler-Wärmetauscher des dritten Wärmetauschermoduls oder stromaufwärts mit dem Gehäusekühler-Wärmetauscher des dritten Wärmetauschermoduls und stromabwärts mit dem Ladeluftwärmetauscher des ersten Wärmetauschermoduls verbunden sein. Ist mehr als ein Nebenaggregat-Wärmetauscher vorgesehen, können auch beide Anordnungsvarianten in einer Vorrichtung vorliegen. Das Nebenaggregat kann eine Ölkühlung, eine Pumpe oder eine andere wärmeerzeugende Vorrichtung der Hochdruckvorrichtung sein.

In einer weiteren Ausführungsform der erfindungsgemäßen Hochdruckvorrichtung kann vorgesehen sein, dass das dritte Wärmetauschermodul oder das vierte Wärmetauschermodul oder beide jeweils eine regelbare Bypassvorrichtung mit einer Bypassleitung aufweisen, die einen Bypass zu dem Gehäusekühler-Wärmetauscher bzw. dem Nebenaggregat-Wärmetauscher bereitstellt. Durch die Möglichkeit der Bypassierung kann die Austrittstemperatur des Arbeitsfluids weiter variiert werden.

Zur automatisierten Temperatursteuerung kann die Hochdruckvorrichtung zumindest einen Temperatursensor aufweisen, der zur Messung einer Austrittstemperatur des Arbeitsfluids am Arbeitsfluidausgang angeordnet ist. Dazu weist die Hochdruckvorrichtung eine mit dem zumindest einen Temperatursensor verbundene Steuerungsvorrichtung auf, die zumindest mit der Bypassklappe des Abgaswärmetauschers, ggf. auch mit den Bypassvorrichtungen des dritten und/oder vierten Wärmetauschermoduls verbunden ist, um diese in Abhängigkeit eines von dem zumindest einen Temperatursensor erfassten Temperaturwerts zur Einstellung eines in der Steuerungsvorrichtung hinterlegten Sollwerts der Austrittstemperatur zu betätigen.

Die Steuerungsvorrichtung ist damit ausgebildet, ein Verfahren zur Steuerung der Arbeitsfluidaustrittstemperatur oder Brauchwasseraustrittstemperatur unter Verwendung einer erfindungsgemäßen Hochdruckvorrichtung auszuführen. Zunächst wird das zu erwärmende Arbeitsfluid oder Brauchwasser mit einer Eintrittstemperatur an das erste Wärmetauschermodul zugeführt, wobei das Brauchwasser den ersten Abgaswärmetauscher bzw. den zweiten Abgaswärmetauscher passiert. Dadurch wird das Brauchwasser auf eine aktuelle, höhere Temperatur als die .Eintrittstemperatur erwärmt, wobei die Erwärmung bis zur gewünschten Austrittstemperatur erfolgen kann. Das Arbeitsfluid bzw. Brauchwasser kann auch die weiteren erfindungsgemäß vorgesehenen Wärmetauschermodule zum Erwärmen des Brauchwassers passieren, um die gewünschte Soll-Austrittstemperatur zu erreichen. Während des Durchlaufs wird mit einem oder mehreren Temperatursensor(en) die aktuelle Temperatur des Brauchwassers erfasst und mit einer vorbestimmten Soll-Austrittstemperatur verglichen. Bei nicht-Erreichen des Sollwerts wird die Bypassklappe angesteuert und die Bypassleitung(en) teilweise oder vollständig geöffnet oder geschlossen. Wenn die Soll-Austrittstemperatur niedriger ist als die Ist-Temperatur wird die Bypassklappe so bewegt, dass die Bypassleitung teilweise oder vollständig geschlossen wird und dadurch der Abgasstrom in dem Wärmetauschermodul verringert wird. Wenn die Soll-Austrittstemperatur höher ist als die Ist-Temperatur wird die Bypassklappe so angesteuert, dass die Bypassleitung teilweise oder vollständig geöffnet wird, und der Abgasstrom in dem oder den Wärmetauschermodul(en) erhöht werden kann.

Hiermit kann die Wärmeabgabe an das Brauchwasser angepasst werden und die Austrittstemperatur gesteuert werden.

Bei der erfindungsgemäßen Hochdruckvorrichtung ist eine Vollkapselung möglich, und es kann ein Gesamtwirkungsgrad von 100% Brennwertnutzung erreicht werden. Die Vollkapselung meint eine Verkapselung des Gesamtaggregates, insbesondere der Wärme-Kraft-Maschine. Dies bietet eine sehr gute Geräuschdämmung des Gesamtaggregates, um gesetzliche Lärmschutzauflagen bei mobilen Systemen einhalten zu können. Ferner kann so die durch einen notwendigen Gehäuselüfter ebenfalls entstehende Strahlungswärme genutzt werden. Zwar können wegen des komplexeren Aufbaus höhere Kosten mit der Herstellung der Hochdruckvorrichtung verbunden sein, allerdings werden aufgrund des Verzichts auf einen Brenner deutliche Einsparungen im Betrieb erreicht. Die Mehrkosten im Aufbau können sich in Bezug auf eine Vorrichtung mit starkem Brenner relativieren, aufgrund der dafür notwendigen Sicherheitstechnik und Zusatztank für den Brenner.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine schematische Darstellung einer Hochdruckvorrichtung aus dem Stand der Technik
- **Fig. 2**: eine schematische Darstellung einer erfindungsgemäßen Hochdruckvorrichtung ohne Details,
- **Fig. 3**: eine schematische Darstellung der Vorrichtung zum Erwärmen des Arbeitsfluids mit zwei Wärmetauschermodulen,
- **Fig. 4**: eine schematische Darstellung der Vorrichtung zum Erwärmen des Arbeitsfluids mit vier Wärmetauschermodulen,
- **Fig. 5**: eine schematische Darstellung der Vorrichtung zum Erwärmen des Arbeitsfluids mit drei Wärmetauschermodulen in alternativer Anordnung,
- **Fig. 6**: eine schematische Darstellung der Vorrichtung zum Erwärmen des Arbeitsfluids mit vier Wärmetauschermodulen in alternativer Anordnung,
- **Fig. 7a**: ein schematisches Ablaufdiagramm mit beispielhaften Temperaturniveaus für eine Eintrittstemperatur von 25 °C bei einem Förderstrom von 0,6 m³/h, und
- **Fig. 7b**: ein schematisches Ablaufdiagramm mit beispielhaften Temperaturniveaus für eine Eintrittstemperatur von 25 °C bei einem Förderstrom von 1,2 m³/h.

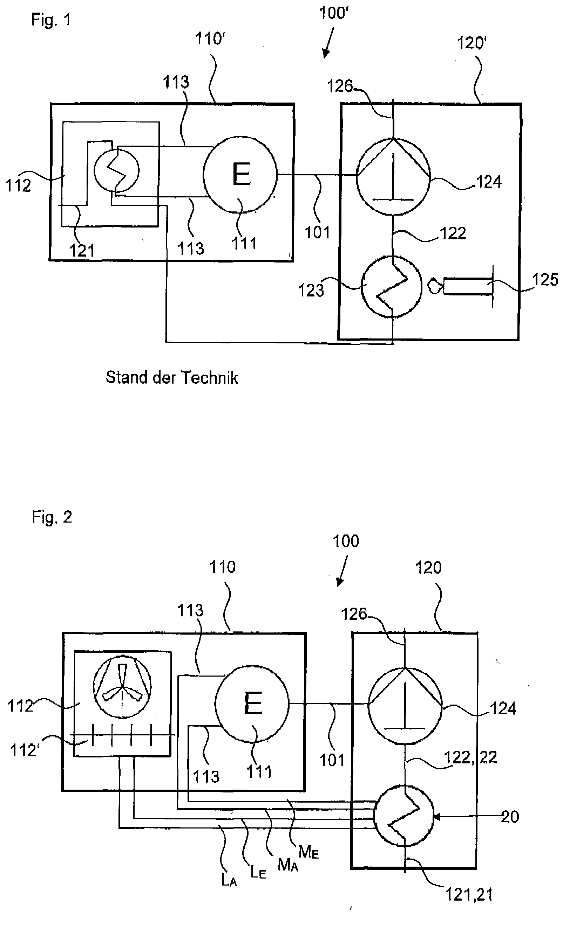

Die erfindungsgemäße Hochdruckvorrichtung 100, die in **Fig. 2** lediglich skizzenhaft dargestellt ist, ist energieautark und daher mobil einsetzbar und ermöglicht es, ein Arbeitsfluid ohne Einsatz eines Brenners oder eines in der Leistung reduzierteren Brenners, der auch weniger Energie verbraucht, auf ein erforderliches oder gewünschtes Temperaturniveau zu bringen. Der Einfachheit halber wird nachfolgend auf Brauchwasser als Fluid Bezug genommen, das mit Hochdruck gefördert werden soll.

**Fig. 1** zeigt eine mobile Hochdruckvorrichtung 100' aus dem Stand der Technik, die sich 5 aus einer Antriebseinheit 110' und einer Pumpeneinheit 120' zusammensetzt. Die Antriebseinheit 110' weist eine Wärmekraftmaschine 111 auf, die jegliche zum Betreiben der Pumpe 124 geeignete Verbrennungsmaschine vom Dieselmotor bis zur Gasturbine sein kann. Der Einfachheit halber wird im Folgenden auf einen Motor 111 Bezug genommen. Der Motor 111 wird durch eine im Kreislauf 113 geführte Kühlflüssigkeit eines Motorkühlers 112 gekühlt. Mittels eines Getriebeelements 101 betreibt der Motor 111 die Pumpe 124 der Pumpeneinheit 120'. Das Brauchwasser wird über einen Brauchwassereingang 121 einem Wärmetauscher 123 zugeführt, in dem das Brauchwasser mittels der von einem Brenner 125 erzeugten Wärme erhitzt wird. Über den Brauchwasserausgang 122 gelangt das erwärmte Brauchwasser zur Pumpe 124, die das Brauchwasser auf Hochdruck zum Hochdruckausgang 126 fördert. Das Brauchwasser wird, bevor es die Brenner-Wärmetauschervorrichtung 123 durchfließt, durch den Motorkühler 112 geführt, wobei das Brauchwasser die Abwärme des Motors 111 aufnimmt und damit vorgewärmt wird.

Die erfindungsgemäße Hochdruckvorrichtung 100 in **Fig. 2** unterscheidet sich von der aus dem Stand der Technik bekannten Vorrichtung dadurch, dass sie keinen Brenner 125 aufweist oder braucht, sondern eine Vorrichtung zum Erwärmen des Brauchwassers, die hier ein Wärmetauschermodul 20 auf der Saugseite der Pumpe 124 aufweist, das die Wärmequelle der Hochdruckvorrichtung 100 nutzt. Zwar kann ein zusätzlicher Brenner genutzt werden, ist aber nicht unbedingt notwendig. Allein durch Nutzen der vorhandenen thermischen Energie kann das Brauchwasser ausreichend erwärmt werden. Dies hat zur Folge, dass Emissionen reduziert werden, bei gleichzeitiger Steigerung der Effizienz.

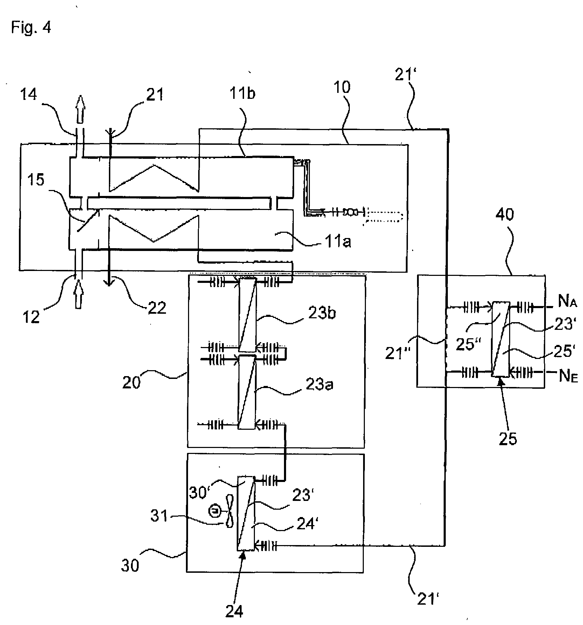

Es können auch in einer weiteren Ausführungsform wie gezeigt etwa in **Fig. 4****,** weitere Wärmetauschermodule 30,40 vorliegen, die die verschiedenen vorhandenen Wärmequellen der Hochdruckvorrichtung 100 nutzen.

Es hat sich herausgestellt, dass bei bestimmter Anordnung der Wärmetauscher 10, 20, 30,40 diese vorhandenen Wärmequellen tatsächlich ausreichend sind, das Brauchwasser auf ein gewünschtes Temperaturniveau zu erhitzen, sodass auf einen Brenner verzichtet werden kann und der damit verbundene zusätzliche kostenträchtige Kraftstoffverbrauch und CO₂- und sonstige Schadstoffausstoß vermieden werden kann.

So wird erfindungsgemäß auch die dem Motor 111 durch einen Ladeluftkühler 112' zugeführte, zu kühlende Ladeluft genutzt, um das Brauchwasser in einem ersten Wärmetauscher 23a zu erwärmen.

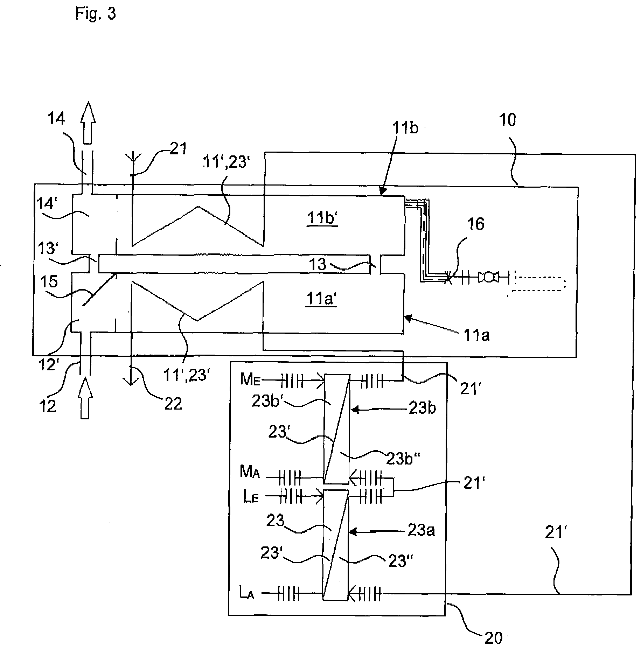

**Fig. 3** zeigt eine erfindungsgemäße Vorrichtung zum Erwärmen des Brauchwassers, die sich aus zwei Wärmetauschermodulen 10, 20 zusammensetzt. Das erste Wärmetauschermodul 20 umfasst einen Ladeluftkühler 23a und einen Antriebskühlfluid-Wärmetauscher 23b, der auch als Motorkühlwasser-Wärmetauscher 23b bezeichnet werden kann. Es soll aber nicht ausgeschlossen werden, dass auch andere Kühlmedien zum Kühlen der Wärmekraftmaschine 111 eingesetzt werden können. Das zweite Wärmetauschermodul 10 umfasst zwei Abgaswärmetauscher 11a, 11b. Das aus dem Motor 111 (nicht figurativ gezeigte) abgeleitete heiße Abgas gelangt durch den Abgaseingang 12 in den ersten Wärmetauscher 11a, passiert dort zum Wärmeaustausch/-abgabe den Durchtrittsraum 11a', und gelangt über eine Abgasverbindungsleitung 13 in den zweiten Abgaswärmetauscher 11b zum weiteren Wärmeaustausch/-abgabe bei Passage des Durchtrittsraums 11b' und von dort durch die Austrittskammer 14' zum Abgasausgang 14.

Das zu erwärmende Brauchwasser passiert die Wärmetauscher 11a, 11b, 23a, 23b hierbei in einer bestimmten Reihenfolge: Vom Brauchwassereingang 21 wird das Brauchwasser zunächst in einem entsprechenden Brauchwasser-Durchtrittsraum 11' durch den zweiten Abgaswärmetauscher 11b geführt, der durch eine wärmeleitende Wandung 23' von dem Abgasdurchtrittsraum 11b' getrennt ist, um Wärme aufzunehmen. Der zweite Abgaswärmetauscher 11b stellt damit eine Brennwertstufe dar. Durch das kalte Temperaturniveau des Brauchwassers in dieser Stufe ist eine Abkühlung des Abgases unter den Taupunkt möglich. Damit nutzt man nicht nur die vorhandene Wärme aus, sondern kann durch kondensierenden Wasserdampf zusätzlich Wärme zum Erhitzen des Brauchwassers nutzen (Brennwerttechnik). Der im Abgas vorhandene Wasserdampf entsteht bei der Verbrennung von Kraftstoff in der Wärme-Kraftmaschine. Eine Abkühlung des Abgases unterhalb der Umgebungstemperatur ist damit möglich. Die Darstellung als Linie soll den Brauchwasser-Durchtrittsraum 11' innerhalb einer wärmeleitenden Wandung 23' als Rohrleitung symbolisieren. Dies soll aber nicht als Beschränkung auf eine einzige Rohrleitung verstanden werden.

Generell soll die Darstellung der Wärmetauscher in den Figuren nur symbolisch verstanden werden - die Wärmetauscher können eine beliebige Bauform aufweisen. So können die Abgaswärmetauscher - und auch die anderen, nachfolgend beschriebenen Wärmetauscher - jeweils als Platten- oder Lamellenwärmetauscher, Spiralwärmetauscher, Heiz- bzw. Kühlregister (eine Kombination von Rohren für ein flüssiges Medium und daran befestigten Lamellen für ein gasförmiges Medium), oder vorzugsweise Rohrbündelwärmetauscher ausgebildet werden, wobei im vorliegenden Fall das Brauchwasser durch den Rohrraum bzw. die Vielzahl der Rohre gefördert wird, während das Abgas durch den die Rohre umgebenden Mantelraum strömt. Ferner hat der zweite Abgaswärmetauscher 11b eine Vorrichtung 16 zur Ableitung von Kondensat aus dem sich abkühlenden Abgasstrom.

Nach Passage des zweiten Abgaswärmetauschers 11b wird das Brauchwasser durch eine Verbindungsleitung 21' zum Ladeluftwärmetauscher 23a des ersten Wärmetauschermoduls 20 geführt, wo ein Wärmeübergang von der warmen Ladeluft/von dem erwärmten Kühlmedium aus dem Ladeluftkühler 112' auf das Brauchwasser stattfindet, das den Durchtrittsraum 23" des Ladeluftwärmetauschers 23a durchströmt. Die Ladeluft/das Ladeluft-Kühlmedium wird hier vom Ladelufteingang L_{E} im Gegenstrom durch den Durchtrittsraum 23' zum Ladeluftausgang L_{A} geführt.

Über eine weitere Verbindungsleitung 21' gelangt das zunehmend erwärmte Brauchwasser zu dem Motorkühlwasser-Wärmetauscher 23b. Beim Durchlaufen des Durchtrittsraums 23b" nimmt das Brauchwasser über die wärmeleitende Wandung 23' weiter Wärme auf, die das über den Motorkühlwassereingang ME durch den Durchtrittsraum 23' zum Motorkühlwasserausgang MA geführte Motorkühlwasser abgibt.

Eine weitere Erwärmung des Brauchwassers findet im stromabwärts über eine weitere Verbindungsleitung 21' angeschlossenen ersten Abgaswärmetauscher 11a statt, wo das vom Motor 111 kommende heiße Abgas (380°C bis 700°C, insbesondere 400 °C bis 450 °C, je nach Motor) zur abschließenden Erwärmung des Brauchwassers auf bis zu 110 °C oder höher (je nach Wassereintrittstemperatur und Förderleistung) genutzt werden kann, ehe das erhitzte Brauchwasser die Vorrichtung zur Erwärmung über den Brauchwasserausgang 22 zur Pumpe 124 verlässt.

Ergänzend wird erwähnt, dass das gesamte System, in dem das Arbeitsfluid geführt wird, als Überdrucksystem ausgeführt ist. Das heißt, dass eine Verschiebung des Siedepunktes des Brauchwassers erfolgt. Ist ein möglicher Betriebszustand nahe beim Siedepunkt, so kommt ein oder kommen mehrere Sicherheitstemperaturbegrenzer zum Einsatz, um im Fehlerfall eine Notabschaltung des Systems vorzunehmen und um Dampfbildung zu verhindern.

Um das Austrittstemperaturniveau des Brauchwassers in gewissem Umfang steuern bzw. regulieren zu können, weist das zweite Wärmetauschermodul 10 zwischen dem ersten und dem zweiten Abgaswärmetauscher 11a, 11b eine Bypassleitung 13' auf, die sich von der Abgaseintrittskammer 12' des ersten Abgaswärmetauschers 11a zu der Abgasaustrittskammer 14' des zweiten Abgaswärmetauschers 11b erstreckt. Der erste Abgaswärmetauscher 11a weist dabei in der Abgaseintrittskammer 12' eine regelbare Bypassklappe 15 auf, die in den Figuren aus zeichnerischen Gründen in einer Zwischenstellung dargestellt ist. Sie kann im Einsatz jedoch entweder die Bypassleitung 13' verschließend angeordnet sein, sodass der durch den Abgaseingang 12 eintretende Abgasstrom den ersten und den zweiten Wärmtauscher 11a, 11b durchläuft, ehe er zum Abgasausgang 14 gelangt. Oder die Bypassleitung 13' kann auch im Einsatz durch eine Zwischenstellung eine Regelfunktion ermöglichen und auf eine Soll-Austrittstemperatur regeln. Bei einer Zwischenstellung wird nur ein Teil des Abgases gekühlt und somit auch nur ein Teil der Energie in das Brauchwasser eingetragen. Oder die Bypassklappe 15 verschließt die Passage zu den Durchtrittsräumen 11a', 11b' der Abgaswärmetauscher 11a, 11b und öffnet die Bypassleitung 13', so dass der Abgasstrom vom Abgaseingang 12, durch die Eintrittskammer 12', über die Bypassleitung 13' in die Austrittskammer 14' direkt zum Abgasausgang 14 gelangt, ohne dass ein Wärmeaustausch mit dem Brauchwasser stattfindet. Die Abgaswärmetauscher 11a, 11b können insbesondere dann bypassiert werden, wenn das durch die Wärmetauscher 23a, 23b des ersten Wärmetauschermoduls 20 (und ggf. auch die weiteren Wärmetauschermodule 30, 40, die nachfolgend noch beschrieben werden) erreichte Temperaturniveau bei gegebener Eintrittstemperatur des Brauchwassers und Förderleistung ausreichend für den gewünschten Einsatzzweck ist.

**Fig. 4** zeigt eine erweiterte Variante einer erfindungsgemäßen brennerlosen Vorrichtung zum Erwärmen des Brauchwassers, die außer den oben beschriebenen ersten und zweiten Wärmetauschermodulen 10, 20, die hier nicht erneut beschrieben werden, zwei weitere Wärmetauschermodule 30, 40 aufweist. Wenngleich nicht dargestellt, sind auch Varianten denkbar, in denen die Vorrichtung zum Erwärmen des Brauchwassers nicht beide zusätzlichen Wärmetauschermodule 30, 40 aufweisen muss - eine erfindungsgemäße Vorrichtung kann auch unabhängig voneinander entweder das Wärmetauschermodul 30 oder das Wärmetauschermodul 40 in Verbindung mit dem ersten Wärmetauschermodul 20 und vorzugsweise auch dem zweiten Wärmetauschermodul 10 aufweisen.

In der in **Fig. 4** beispielhaft dargestellten Vorrichtung durchläuft das Brauchwasser nach Austritt aus dem zweiten Abgaswärmetauscher 11b die zwei Wärmetauschermodule 30, 40, ehe es zu dem Ladeluftwärmetauscher 23a des ersten Wärmetauschermoduls 20 gelangt. In dem hier gezeigten Beispiel verläuft eine Verbindungsleitung 21' von dem zweiten Abgaswärmetauscher 11b zu einem Nebenaggregat-Wärmetauscher 25 des vierten Wärmetauschermoduls 40. Anders als dargestellt, kann das vierte Wärmetauschermodul 40 auch mehrere Wärmetauscher aufweisen, das hängt von der Anzahl der vorhandenen wärmeerzeugenden Nebenaggregate und dem für die Wärmetauscher nutzbaren Bauraum ab. Geeignete Nebenaggregate können eine Ölkühlung, eine Pumpe oder auch jede andere wärmeerzeugende Vorrichtung der Hochdruckvorrichtung 100 sein. Das Brauchwasser nimmt beim Passieren des für das Brauchwasser vorgesehenen Durchtrittsraums 25" von dem im Kreislauf geführten Kühlungsfluid des jeweiligen Nebenaggregats Wärme auf das durch den Nebenaggregatskühleingang N_{E} in den Durchtrittsraum 25' gelangt, der durch eine oder mehrere wärmeleitende Wandungen 23' von dem Brauchwasserdurchtrittsraum 25" abgegrenzt ist. Das dann abgekühlte Nebenaggregatskühlmittel verlässt den Wärmetauscher 25 über den Nebenaggregatskühlausgang N_{A}.

Das Brauchwasser gelangt über eine weitere Verbindungsleitung 21' zu dem Gehäusekühler-Wärmetauscher 24 des dritten Wärmetauschermoduls 30, in dem Wärmeaustausch mit einem Gehäusekühler 31 der Hochdruckvorrichtung 100 stattfindet. Die beim Passieren des Gehäusekühlers 31 erwärmte Kühlerluft durchströmt einen Durchtrittsraum 30' des Wärmetauschers 24, der ebenfalls durch eine oder mehrere wärmeleitende Wandungen 23' von dem Durchtrittsraum 24' für das Brauchwasser abgetrennt ist. Von diesem Wärmetauscher 24 wird das Brauchwasser in den bereits beschriebenen Ladeluftwärmetauscher 23a gefördert, ebenfalls über eine entsprechende Verbindungsleitung.

In **Fig. 4** ist durch eine gestrichelte Linie im vierten Wärmetauschermodul 40 angedeutet, dass der Nebenaggregat-Wärmetauscher 25 bypassiert werden kann. Hierfür können die jeweiligen Verbindungsleitungen 21' mit entsprechenden, vorzugsweise regelbaren Bypassvorrichtungen ausgestattet werden, die in der Figur nicht dargestellt sind, dem Fachmann aber bekannt sind. Diese Möglichkeit zur Bypassierung dient wie der Bypass der Abgaswärmetauscher 11a, b zur Einstellung der Austrittstemperatur des Brauchwassers.

Eine dem Wärmetauschermodul 40 entsprechende Bypassierung kann auch im Wärmetauschermodul 30 vorgesehen sein, wenngleich dies nicht dargestellt ist, sodass auch der Gehäusekühler-Wärmetauscher 24 in Abhängigkeit der gewünschten Austrittstemperatur 5 bei Bedarf bypassiert werden kann. Durch die verschiedenen regelbaren Bypässe, die unabhängig voneinander geöffnet und geschlossen werden können, lässt sich das erreichbare Austrittstemperaturniveau einstellen. Mit der in **Fig. 4** dargestellten Ausführungsform kann eine möglichst hohe thermische Energieausbeute erreicht werden.

0 Zur Automatisierung der Temperatureinstellung kann zumindest ein Temperatursensor am Brauchwasserausgang 22 (ggf. auch weitere Temperatursensoren an vorbestimmten Stellen) vorgesehen sein, um die Austrittstemperatur (bzw. Zwischentemperaturen) des Brauchwassers zu erfassen, so dass von einer Steuerungseinheit (nicht dargestellt) die erfassten Temperaturwerte mit vorgegebenen Sollwerten verglichen und in Abhängigkeit 5 einer Abweichung der gemessenen Werte von den Sollwerten ein Öffnen und Schließen der Bypassleitung 13' durch Betätigung der Bypassklappe 15 (sowie der ggf. weiteren Bypassvorrichtungen der Wärmetauschermodule 30, 40) bewirkt werden können, damit die Austrittstemperatur ein gewünschtes Sollniveau erreicht.

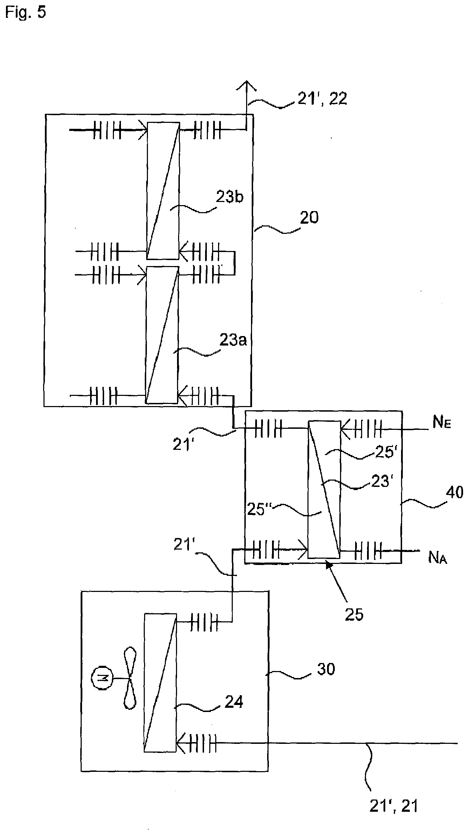

Abhängig von den Temperaturniveaus der verschiedenen Wärmetauschermedien kann auch eine alternative Anordnung der Wärmetauschermodule 20, 30, 40 sinnvoll sein, wie sie in **Fig. 5** gezeigt ist: Hier ist die Reihenfolge der Wärmetauschermodule 30 und 40 umgekehrt. Das Brauchwasser wird zuerst durch den Gehäusekühler-Wärmetauscher 24 des Wärmetauschermoduls 30 geleitet, ehe der Nebenaggregat-Wärmetauscher 25 des Wärmetauschemoduls 40 passiert wird, und das Brauchwasser von dort dann zu dem Ladeluftwärmetauscher 23a des Wärmetauschermoduls 20 gelangt. Das hier gezeigte Beispiel einer erfindungsgemäßen Vorrichtung zum Erwärmen des Brauchwassers verzichtet auf einen Abgaswärmetauscher.

Es ist aber auch eine (nicht figurativ gezeigte) Variante denkbar, in der die Wärmetauscher 20, 30, 40 mit einem Abgaswärmetauschermodul 10 entsprechend **Fig. 3****,** **4** ergänzt werden. Dann ist der zweite Abgaswärmetauscher 11b stromaufwärts zu dem Wärmetauschermodul 30 angeordnet und der erste Abgaswärmetauscher 11a stromabwärts zu dem Wärmetauschermodul 20.

Ebenfalls nicht figurativ gezeigt ist eine Variante der Vorrichtung zur Erwärmung des Brauchwassers, in der das vierte Wärmetauschermodul 40 mehrere Nebenaggregat-Wärmetauscher 25 aufweist. Diese können wiederum abhängig vom jeweiligen Temperaturniveau der Wärmeübertragermedien entweder in Reihe geschaltet werden, oder es kann in einer kombinierten Anordnung einer der Nebenaggregat-Wärmetauscher 25, wie in **Fig. 4** dargestellt, zwischen Wärmetauschermodul 10 und Wärmetauschermodul 30 und ein weiterer der Nebenaggregat-Wärmetauscher 25 zwischen Wärmetauschermodul 30 und Wärmetauschermodul 20 angeordnet sein, wie in **Fig. 5** dargestellt ist. Mit dieser Ausführungsform sind möglichst geringe Geräuschemissionen zu erreichen.

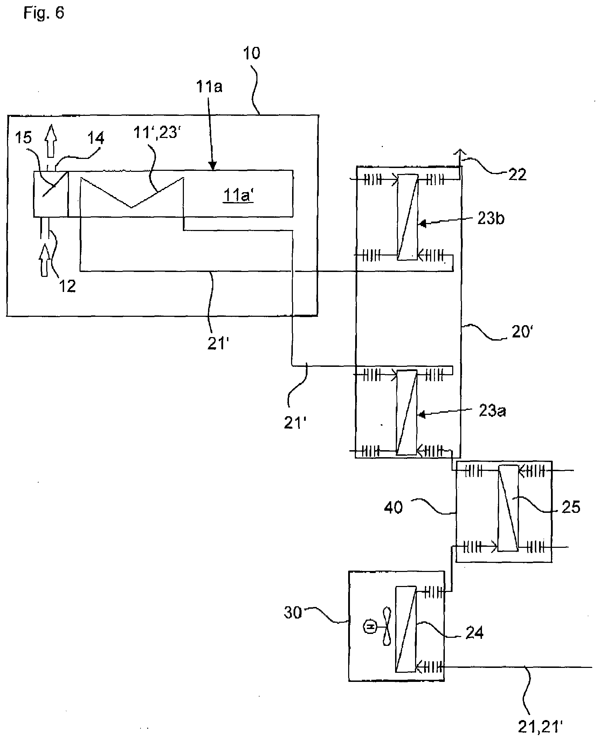

**Fig. 6** zeigt eine weitere alternative Vorrichtung zur Brauchwassererwärmung. Diese unterscheidet sich dadurch, dass das Abgaswärmetauschermodul 10 nur einen einzigen Abgaswärmetauscher 11a aufweist. Dieser ist ebenfalls mit einer Bypassklappe 15 ausgestattet, um bei Bedarf den Abgasstrom im Bypass ohne Wärmeaustausch mit dem Brauchwasser zu führen. Ein weiterer Unterschied zu der in Zusammenhang mit **Fig. 3****,****4** beschriebenen Ausführungsform mit zwei Abgaswärmetauschern 11a, 11b liegt in der abweichenden Anordnung der Wärmetauscher 23a,b des Wärmetauschermoduls 20': Diese sind nicht unmittelbar aufeinanderfolgend angeordnet, sondern der Gesamtabgaswärmetauscher 11a der in **Fig. 6** gezeigten beispielhaften Vorrichtung ist in Bezug auf den Brauchwasserstrom zwischen dem Ladeluftwärmetauscher 23a und dem Motorkühlwasser-Wärmetauscher 23b des ersten Wärmetauschermoduls 20' angeordnet. Die Anordnung der weiteren Wärmetauschermodule 30, 40 entspricht der in **Fig. 5** gezeigten, wobei das Brauchwasser zuerst das Wärmetauschermodul 30 mit dem Gehäusekühler-Wärmetauscher 24 und dann das Wärmetauschermodul 40 mit dem Nebenaggregat-Wärmetauscher 25 passiert, ehe es in den Ladeluftwärmetauscher 23a des Wärmetauschermoduls 20' eintritt. Nicht dargestellt, aber ebenfalls eine denkbare Variante sieht vor, dass die Wärmetauschermodule 30, 40 ebenfalls Bypassvorrichtungen aufweisen können, wie sie in Zusammenhang mit **Fig. 4** erläutert wurden, um das Brauchwasseraustrittstemperaturniveau besser einstellen zu können. Die in **Fig. 6** dargestellte Variante mit einem Abgaswärmetauscher ermöglicht einen besonders kompakten, kostengünstigen Aufbau.

Die mit der erfindungsgemäßen Vorrichtung zur Erwärmung maximal erreichbare Austrittstemperatur eines Arbeitsfluids hängt dabei von der Eintrittstemperatur des Arbeitsfluids bzw. Brauchwassers und von der Förderleistung, d. h. von dem geförderten Volumenstrom ab. So kann beispielsweise mit einem 55 kW Dieselaggregat durch eine erfindungsgemäße brennerlose Vorrichtung zum Erwärmen, wie in **Fig. 3** gezeigt, bei 7 °C Eintrittstemperatur des Wassers und einem Förderstrom von 0,6 m³/h eine maximale Austrittstemperatur von 40,5 °C erreicht werden. Bei gleichem Förderstrom wird bei einer Eintrittstemperatur von 25 °C eine Austrittstemperatur von 58,4°C erreicht. Bei Verdopplung des Förderstroms auf 1,2 m³/h (maximale Förderleistung der Pumpe bei 1000 bar) werden bei gleichen Eintrittstemperaturen 79,1°C bzw. 96,3°C Austrittstemperatur erreicht. Eine Einstellung der Austrittstemperatur unterhalb dieser maximal erreichbaren Austrittstemperatur wird durch die Bypassregelungen der Wärmetauschermodule 10, 30, 40 möglich.

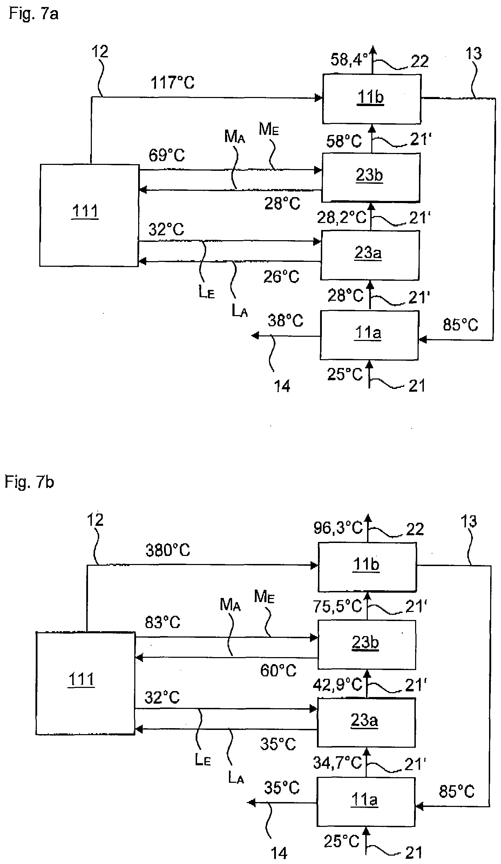

In **Fig. 7a** und **7b** sind dazu Beispiele von möglichen Temperaturniveaus gezeigt, wobei schematisch eine erfindungsgemäße Hochdruckvorrichtung 100 nach **Fig. 4** zu Grunde liegt. Dabei wird in beiden Beispielen von einer Eintrittstemperatur von 25°C ausgegangen. Bei dem in **Fig. 7a** gezeigten Beispiel liegt ein Förderstrom von 0,6 m³/h bei 17 kW vor: Dabei wird unter Ausnutzung der Wärmetauscher 11a, 11b, 23a, 23b eine Austrittstemperatur von 58,4°C erreicht. Bei dem in **Fig. 7b** gezeigten Beispiel liegt ein Förderstrom von 1,2 m³/h bei 55 kW vor, wobei eine Austrittstemperatur von 96,3 °C erreicht wird. In den **Fig. 7a, 7b** sind die jeweiligen Temperaturen der Stoffströme mittels Pfeilen angegeben. So kann abhängig von dem Förderstrom die jeweilig zu erreichende Austrittstemperatur angestrebt werden.

Durch die Verwendung der beschriebenen Brauchwasser-Kühlung des Motors ist es überhaupt erst möglich, den Motor so zu dämmen und einzuhausen, dass hohe Lärmschutzanforderungen leicht zu erfüllen sind. Des Weiteren fällt eine weitere große Lärmquelle (nämlich der Lüfter) weg. Ein vorteilhafter Nebeneffekt ist, dass die mechanische Motorleitung, die vorher zum Antrieb des Lüfters notwendig war, jetzt dem Antrieb der Pumpe zur Verfügung steht, oder umgekehrt Kraftstoff gespart werden kann, da der Lüfter keine Motorleistung mehr verbraucht.

**BEZUGSZEICHENLISTE**

| | | | |
|---|---|---|---|
| 10 | Abgaswärmetauschermodul | 25', | Fluid-, |
| | | 25" | BW-Durchtrittsraum |
| 11a | Abgaswärmetauscher | 30 | Gehäusekühler-WT-Einheit |
| 11b | Abgaswärmetauscher | 30' | Kühlerluftdurchtrittsraum |
| 11a,b | Abgasdurchtrittsraum | 31 | Gehäusekühler |
| 11' | Arbeitsfluiddurchtrittsraum | 40 | Nebenaggr. -WT-Einheit |
| 12, 12' | Abgaseingang, Eintrittskammer | 100 | Hochdruckvorrichtung |
| 13 | Verbindungleitung | 100' | Hochdruckvorrichtung SdT |
| 13' | Bypassleitung | 101 | Getriebeelement |
| 14, 14' | Abgasausgang, Austrittskammer | 110 | Antriebseinheit |
| 15 | Bypassklappe | 110' | Antriebseinheit SdT |
| 16 | Kondensatauslass | 111 | Wärmekraftmaschine |
| 20 | Ladeluft- und Motorkühlung-Wärmetauschermodul | 112 | Motorkühlung |
| | | 112' | Ladeluftkühlung |
| 20' | modifizierte WT-Einheit | 113 | Kühlleitung |
| 21 | Arbeitsfluideingang | 120 | Pumpeneinheit |
| 21', 21" | Verbindungs-, Bypassleitung | 120' | Pumpeneinheit SdT |
| 22 | Arbeitsfluidausgang | 121 | Arbeitsfluideingang |
| 23 | Ladeluftdurchtrittsraum | 122 | Arbeitsfluidausgang |
| 23' | wärmeleitende Wandung | 123 | Wärmetauscher |
| 23a | WT Ladeluftkühler | 124 | Pumpe |
| 23b | WT Antriebskühlfluid | 125 | Brenner |
| 23b' | Kühlfluid-Durchtrittsraum | 126 | Hochdruckausgang |
| 23", 23b" | Arbeitsfluiddurchtrittsraum | | |
| 24 | WT Gehäusekühler | L_{E}, LA | Ladeluftein-, -ausgang |
| 24' | Arbeitsfluiddurchtrittsraum | M_{E}, M_{A} | Kühlerfluidein-, -ausgang |
| 25 | Nebenaggregat-Wärmetauscher | N_{E}, N_{A} | Nebenaggregat-Kühlein-, - ausgang |

## Patentansprüche

1. Mobile Hochdruckvorrichtung (100) mit einer Antriebseinheit (110), die eine Wärmekraftmaschine (111) mit einem Fluidkühler (112) aufweist, und mit einer Pumpeneinheit (120), die in Strömungsrichtung eines Arbeitsfluids einen Arbeitsfluideingang (21, 121), eine Vorrichtung zum Erwärmen des Arbeitsfluids, einen Arbeitsfluidausgang (22, 122), eine Pumpe (124), die von der Wärmekraftmaschine (111) angetrieben wird, und einen Hochdruckausgang (126) aufweist,
wobei die Vorrichtung zum Erwärmen des Arbeitsfluids ein Wärmetauschermodul (20, 20') mit einem Kühlerfluidwärmetauscher (23b) aufweist, der mit einem Kühlerfluidkreislauf (M_{E}, M_{A}) des Fluidkühlers (112) der Antriebseinheit (110) in thermischer Wirkverbindung steht, **dadurch gekennzeichnet, dass** die Antriebseinheit (110) ferner einen Ladeluftkühler (112') für die Wärmekraftmaschine (111) aufweist, wobei das Wärmetauschermodul (20, 20') ferner einen Ladeluftwärmetauscher (23a) aufweist, der mit einem Ladeluftstrom (L_{E}, L_{A}) des Ladeluftkühlers (112) der Antriebseinheit (110) in thermischer Wirkverbindung steht, wobei der Ladeluftwärmetauscher (23a) über zumindest eine Verbindungsleitung (21') mit dem Arbeitsfluideingang (21) verbunden ist,
und der Kühlerfluidwärmetauscher (23b) stromabwärts des Ladeluftwärmetauschers (23a) angeordnet ist und über zumindest eine Verbindungsleitung (21') mit dem Ladeluftwärmetauscher (23a) verbunden ist.

2. Hochdruckvorrichtung (100) nach Anspruch 1,
**dadurch gekennzeichnet, dass**
die Vorrichtung zum Erwärmen des Arbeitsfluids ein zweites Wärmetauschermodul (10) aufweist, das zumindest einen Abgaswärmetauscher (11a) aufweist, der mit einer Abgasleitung (12, 13, 13', 14) der Wärmekraftmaschine (111) der Antriebseinheit (110) in thermischer Wirkverbindung steht.

3. Hochdruckvorrichtung (100) nach Anspruch 2,
**dadurch gekennzeichnet, dass**
der erste Abgaswärmetauscher (11a)
in einer ersten Anordnungskonfiguration des ersten Wärmetauschermoduls (20)
- stromaufwärts mit dem Kühlerfluidwärmetauscher (23b) des ersten Wärmetauschermoduls (20) Ober zumindest eine Verbindungsleitung (21') und stromabwärts mit dem Arbeitsfluidausgang (22) verbunden ist,
oder
in einer zweiten Anordnungskonfiguration des ersten Wärmetauschermoduls (20')
- stromaufwärts mit dem Ladeluftwärmetauscher (23a) des ersten Wärmetauschermoduls (20) und stromabwärts mit dem Kühlerfluidwärmetauscher (23b) über jeweils zumindest eine Verbindungsleitung (21') verbunden ist, wobei der Kühlerfluidwärmetauscher (23b) stromabwärts mit dem Arbeitsfluidausgang (22) verbunden ist

4. Hochdruckvorrichtung (100) nach Anspruch 2 oder 3,
**dadurch gekennzeichnet, dass**
der Abgaswärmetauscher (11a) einen Abgasausgang (14) aufweist,
oder
das zweite Wärmetauschermodul (10) einen zweiten Abgaswärmetauscher (11b) aufweist, der den Abgasausgang (14) aufweist und in den eine Abgasverbindungsleitung (13) von dem ersten Abgaswärmetauscher (11a) mündet, wobei der zweite Abgaswärmetauscher (11b) stromaufwärts mit dem Arbeitsfluideingang (21) und stromabwärts mit dem Ladeluftwärmetauscher (23a) des ersten Wärmetauschermoduls (20) über zumindest eine Verbindungsleitung (21') verbunden ist.

5. Hochdruckvorrichtung (100) nach Anspruch 4,
**dadurch gekennzeichnet, dass**
eine Bypassleitung (13') zwischen dem ersten und dem zweiten Abgaswärmetauscher (11a, 11b) verläuft und der erste Abgaswärmetauscher (11a) eine regelbare Bypassklappe (15) aufweist, die zwischen dem Abgaseingang (12) und dem Abgasausgang (14)
- in einer ersten, die Bypassleitung (13') verschließenden Position und in einer zweiten, die Bypassleitung (13') öffnenden Position anordenbar ist.

6. Hochdruckvorrichtung (100) nach zumindest einem der Ansprüche 1 bis 5,
**dadurch gekennzeichnet, dass**
die Vorrichtung zum Erwärmen des Arbeitsfluids ein drittes Wärmetauschermodul (30) aufweist, das einen Gehäusekühler-Wärmetauscher (24) aufweist, der mit einem Gehäusekühler (31) der Hochdruckvorrichtung (100) in thermischer Wirkverbindung steht, wobei der Gehäusekühler-Wärmetauscher (24) stromaufwärts
- mit dem zweiten Abgaswärmetauscher (11b) des zweiten Wärmetauschermoduls (10) oder
- mit dem Arbeitsfluideingang (21)
und stromabwärts
mit dem Ladeluftwärmetauscher (23a) über zumindest eine Verbindungsleitung (21') verbunden ist.

7. Hochdruckvorrichtung (100) nach zumindest einem der Ansprüche 1 bis 6,
**dadurch gekennzeichnet, dass**
die Vorrichtung zum Erwärmen des Arbeitsfluids ein viertes Wärmetauschermodul (40) aufweist, das zumindest einen Nebenaggregat-Wärmetauscher (25) für ein im Kühlkreislauf geführtes Kühlungsfluid eines Nebenaggregats der Hochdruckvorrichtung (100) aufweist, wobei der Nebenaggregat-Wärmetauscher (25)
- stromaufwärts mit dem zweiten Abgaswärmetauscher (11b) des zweiten Wärmetauschermoduls (10) und stromabwärts mit dem Gehäusekühler-Wärmetauscher (24) des dritten Wärmetauschermoduls (30)
oder
- stromaufwärts mit dem Gehäusekühler-Wärmetauscher (24) des dritten Wärmetauschermoduls (30) und stromabwärts mit dem Ladeluftwärmetauscher (23a) des ersten Wärmetauschermoduls (20)
über jeweils zumindest eine Verbindungsleitung (21') verbunden ist.

8. Hochdruckvorrichtung (100) nach Anspruch 7,
**dadurch gekennzeichnet, dass**
das Nebenaggregat eine Ölkühlung, eine Pumpe oder eine andere wärmeerzeugende Vorrichtung der Hochdruckvorrichtung (100) ist.

9. Hochdruckvorrichtung (100) nach Anspruch 7 oder 8,
**dadurch gekennzeichnet, dass**
das dritte Wärmetauschermodul (30) und/oder das vierte Wärmetauschermodul (40) jeweils eine regelbare Bypassvorrichtung mit einer Bypassleitung (21") aufweist, die einen Bypass zu dem Gehäusekühler-Wärmetauscher (24) und/oder dem Nebenaggregat-Wärmetauscher (25) bereitstellt.

10. Hochdruckvorrichtung (100) nach Anspruch 9,
**dadurch gekennzeichnet, dass**
die Hochdruckvorrichtung (100) zumindest einen Temperatursensor, der zur Messung einer Austrittstemperatur des Arbeitsfluids am Arbeitsfluidausgang (22) angeordnet ist, und eine mit dem zumindest einen Temperatursensor verbundene Steuerungsvorrichtung aufweist, die zumindest mit der Bypassklappe (15), ggf. auch mit den Bypassvorrichtungen des dritten und/oder vierten Wärmetauschermoduls (30, 40) zur Betätigung derselben in Abhängigkeit eines von dem zumindest einen Temperatursensor erfassten Temperaturwerts zur Einstellung eines in der Steuerungsvorrichtung hinterlegten Sollwerts der Austrittstemperatur verbunden ist.

11. Verfahren zur Steuerung der Arbeitsfluidaustrittstemperatur unter Verwendung einer Hochdruckvorrichtung nach zumindest einem der Ansprüche 1 bis 10,
**umfassend die Schritte:**
- Zuführen des Arbeitsfluids mit einer Eintrittstemperatur an das zumindest eine Wärmetauschermodul (10, 20), dabei Durchführen des Arbeitsfluids durch den zumindest einen ersten Abgaswärmetauscher (11a) und/oder zweiten Abgaswärmetauscher (11b) und dadurch Erwärmen lassen des Arbeitsfluids auf eine aktuelle, höhere Temperatur als die Eintrittstemperatur;
- währenddessen mit dem zumindest einen Temperatursensor Erfassen der aktuellen Temperatur des Arbeitsfluids und Vergleichen mit einem Sollwert einer Austrittstemperatur;
- Bei nicht-Erreichen des Sollwerts, mit der Steuereinheit Steuern der Bypassklappe (15), dabei zumindest teilweise oder vollständig Öffnen oder Schließen der zumindest einen Bypassleitung (13') und damit Erhöhen oder Verringern eines Abgasstromes durch das zumindest eine Wärmetauschermodul (10, 20) und Steuern der Wärmeabgabe an das Arbeitsfluid.
